# EUROPEAN PATENT APPLICATION

(11) **EP 4 714 615 A1**
(43) Date of publication of application: **25.03.2026**
(21) Application number: 24201673.1
(22) Date of filing: 20.09.2024
(51) Int. Cl.: B25J 9/16, G06F 40/279, G06N 3/006, G06N 3/0499, G06N 3/092

(54) **COMPUTER IMPLEMENTED REINFORCEMENT LEARNING METHOD, REINFORCEMENT LEANING SYSTEM AND COMPUTER PROGRAM PRODUCT WITH THE REINFORCEMENT LEANING SYSTEM**

(71) Applicant: Siemens Aktiengesellschaft, 80333 München (DE)
(72) Inventor: Limmer, Steffen, 80636 München (DE); Sterzing, Volkmar, 85579 Neubiberg (DE); Swazinna, Phillip, 85375 Neufahrn (DE); Weber, Marc Christian, 80339 München (DE)
(74) Representative: Siemens Patent Attorneys

(57) **Abstract**

The invention relates to a computer implemented reinforcement learning method for controlling of a machine, wherein at least one textual machine learning procedure and at least one numeric machine learning procedure are combined together and following steps are carried out:
a) providing of at least one numeric variable for quantifying an operating state of the machine and providing of at least one textual target for describing a predetermined target state of the machine;
b) applying of a textual state generator on the numeric variable and on the textual target for obtaining a textual representation which describes the numeric variable in textual form;
c) applying of the textual machine learning procedure on the textual state representation and on the textual target for obtaining a textual output of the textual machine learning procedure;
d) generating of at least one numeric input for the numeric machine learning procedure by using the textual output;
e) applying of the numeric machine learning procedure on the numeric input for getting a numeric output of the numeric machine learning procedure; and
f) applying of the numeric output for controlling of the numeric machine learning procedure for the controlling of the machine.

In addition, the invention relates to a respective reinforcement leaning system and computer program product with the reinforcement leaning system.

## Description

### BACKGROUND OF THE INVENTION

### 1. Field of the invention

The invention refers to a computer implemented reinforcement learning method, a reinforcement leaning system and a computer program product with the reinforcement leaning system.

### 2. Description of the related art

Reinforcement learning is a machine learning method with a software agent who independently learns a controlling of a machine. The controlling of the machine is a policy (strategy) for a task of the machine. The learning of the controlling and/or the learning of the policy is based on a reward principle. Depending on the learned controlling and/or the learned policy, the software agent gets (positive or negative) rewards.

It can be challenging in environments where an optimal solution for the policy requires learning multiple sub-tasks. Such sub-tasks may involve different time-scales such as short-term motion control tasks that also require long-term strategic planning. One problem is the exploration-exploitation dilemma: The software agent needs to explore various actions and sequences of actions to find the optimal strategy, but many sub-tasks may need to be completed in order to receive a respective reward.

For an advanced reinforcement learning technique approaches such as value function approximation, hierarchical reinforcement learning and model-based method are used which can help to deal with long-term planning and sample efficiency issues. But the known advanded reinforcment learning techniques are not sactisfactory.

It is an objective of the invention to provide a reinforcement leaning method which is improved in comparison to the state of the art.

This objective is achieved by the invention specified in the claims.

For achieving the objective of the invention a computer implemented reinforcement learning method for controlling of a machine is provided, wherein at least one textual machine learning procedure and at least one numeric machine learning procedure are combined together and following steps are carried out:
a) providing of at least one numeric variable for quantifying an operating state of the machine and providing of at least one textual target for describing a predetermined target state of the machine;
b) applying of a textual state generator on the numeric variable and on the textual target for obtaining a textual representation which describes the numeric variable in textual form;
c) applying of the textual machine learning procedure on the textual state representation and on the textual target for obtaining a textual output of the textual machine learning procedure;
d) generating of at least one numeric input for the numeric machine learning procedure by using the textual output;
e) applying of the numeric machine learning procedure on the numeric input for getting a numeric output of the numeric machine learning procedure; and
f) applying of the numeric output for controlling of the numeric machine learning procedure for the controlling of the machine.

Moreover, for the achieving of the objective a reinforcement learning system for carrying out the computer implemented reinforcement learning method with following system elements is provided:
- at least one textual machine learning element for executing of the textual machine learning procedure;
- at least one numeric machine learning element for executing of the numeric machine learning procedure;
- at least one textual state generator for generating of the textual output of the textual machine learning procedure; and
- at least one numerical state generator for generating of the numeric input.

At least, for the achieving of the objective a computer program product with the reinforcement learning system is provided.

The principle idea of the invention is the combination of a language based (textual) machine learning model with a traditional (numeric) learning model in order to control the machine. Thereby, the controlling of the machine comprises a controlling of at least one skill of the machine. For instance, the controlling of the machine refers to a controlling of an actuator of the machine.

In this context, different appropriate numeric machine learning procedures can be used. A selecting of the numeric learning procedure can depend on different selection criteria. Preferably, selecting of the numeric machine learning procedure is made by considering the textual output of the textual machine learning procedure. The selection criteria are based on the output of the textual machine learning prodedure.

The machine can comprise many tasks. An overall task of the machine can be complex. The tasks can be dependent and/or independent from each other. They can be side by side tasks of the machine. A hirachical structure of the tasks is possible, too. In a preferred embodiment, a task is used which is a subtask of an overall task.

In a preferred embodiment, the textual machine learning procedure at least one large language model and for the textual input a prompt of the large language model (LLM) are used.

Preferraby, for the (classical) numeric machine learning procedure at least one neuronal network is used. The different steps of the mathod can be carried out centrally or can be spread. In a preferred embodimet, at least one of the steps of the reinforcement learning method are executed locally and/or executed in a cloud.

Preferrably, for the applying of textual machine learning procedure and/or for the applying of the numeric machine learning procedure at least one missing information is estimated. So, it is not necessery that all data for the specific learning procedure are available for the learning prodedures. Missing (lacking) data can be estimated. By this, the respective learning procedure can be executed althougn not all data are abailabe which are necessary fo the execution of machine learning procedure.

In a preferred embodiment, the textual machine learning procedure is used for generating of a list of skills which can be used for a training of the numeric machine learning procedure.

It is advantageous, that the numeric machine learning procedure and/or the textual learning procedure are carried out with the aid of a computer architecture with an execution time of less than 100 ms, more preferably of less than 10 ms and most preferably of less than 1 ms. For that, a the computer architecture with at least one programmable integrated circuit is used which is selected from the group consisting of Microcontroller, DSP (Digital Signal Processor), FPGA (Field Programmable Gate Array ) and ASIC (Application Specific Integrated Circuit).

The advantage of the invention is the use of LLM for the reinfored leaning. LLMs, such as OpenAI's GPT-3, offer several new capabilities that are currently not used for reinforcement learning. Specified advantages that can be obtained by combining an LLM with numerical reinforcement learning policies include:
- Combine strengths of numerical ("conventional") reinforcement policies (that control a task on lower machine level at high cycle frequency (possibly on performance-limited local edge HW) whereas strategic planning and oversight can be handles by an LLM (potentially running on capable cloud services).
- External numerical policy models can be added, even at a later date, to incorporate operation experience gathered in other sites or cases.
- Modularity/transferability of policy design: For example, the numeric policy could learn just fundamental skills (like how to execute commands on the lower machine level in an optimal way) which hold for many different kinds of machines of applications, while the higher level LLM part could be used to adapt or use those tasks in a larger given context (like increase product quality at the end of a manufacturing line).
- LLMs can capture and understand complex contextual information, making them more effective at specifying and including user-knowledge for generating appropriate responses.
- LLMs can perform well and provide meaningful responses without needing extensive training on specific tasks.
- LLMs can reduce the need for feature engineering. Traditional reinforcement learning often requires extensive feature engineering to extract relevant information from the input data. Especially for cases that require additional numerical information, application constraints, kpi priorization, the state space for a single numerical model can grow very fast making policy training more difficult.
- Execution cycle can use a functional split with i) low latency operation of fast executing reinforcement policies on performance-limited local edge HW and ii) slower strategic planning and oversight by LLM from capable cloud services.

### BRIEF DESCRIPTION OF THE DRAWINGS

Further features and advantages of the invention are produced from the description of an exemplary embodiment with reference to the drawings. The drawings are schematic.

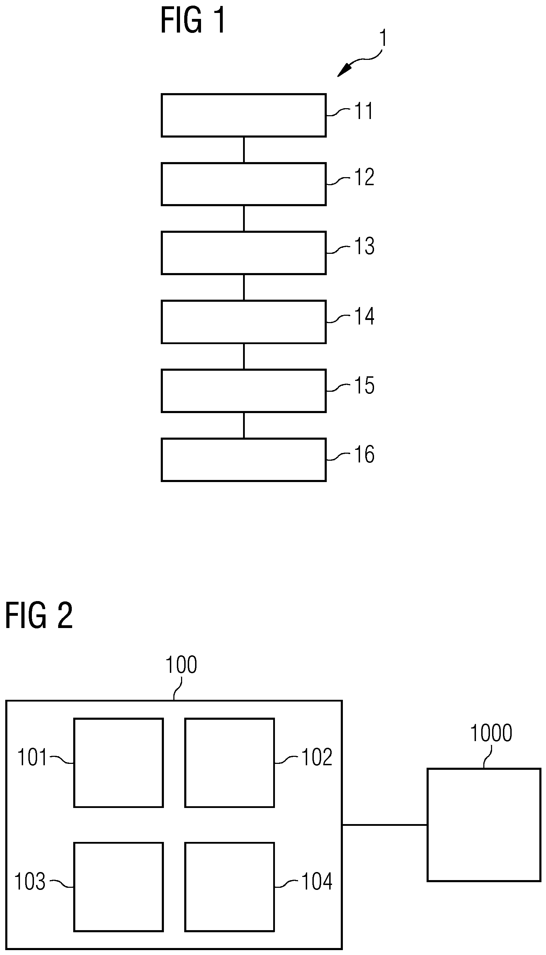

Figure 1 shows the computer implemented reinforcement learning method.
Figure 2 shows a reinforcement learning system.
Figure 3 shows an example of the computer implemented reinforcement learning method.
Figure 4 shows a derivative of the example of the computer implemented reinforcement learning method.

### DETAILED DESCRIPTION OF THE INVENTION

Provided is a computer implemented reinforcement learning method 1 for controlling of a machine 1000, wherein at least one textual machine learning procedure and at least one numeric machine learning procedure are combined together and following steps are carried out:
a) providing of at least one numeric variable for quantifying an operating state of the machine and providing of at least one textual target for describing a predetermined target state of the machine 1000 (11);
b) applying of a textual state generator on the numeric variable and on the textual target for obtaining a textual representation which describes the numeric variable in textual form (12);
c) applying of the textual machine learning procedure on the textual state representation and on the textual target for obtaining a textual output of the textual machine learning procedure (13);
d) generating of at least one numeric input for the numeric machine learning procedure by using the textual output (14);
e) applying of the numeric machine learning procedure on the numeric input for getting a numeric output of the numeric machine learning procedure (15); and
f) applying of the numeric output for controlling of the numeric machine learning procedure for the controlling of the machine (16).

For carrying out the computer implemented reinformnet learning method 1 a reinforcement learning system 100 with following system elements is provided:
- a textual machine learning element 101 for executing of the textual machine learning procedure;
- a numeric machine learning element 102 for executing of the numeric machine learning procedure;
- a textual state generator 103 for generating of the textual output of the textual machine learning procedure; and
- a numerical state generator 104 for generating of the numeric input.

The example refers to a computer implemented reinforcement learning method for controlling the walking of a robot. In preparation of the reinforcement learning following steps 1. to 5. are carried out.

### 1. LLM-based skill extraction

In a first step a LLM is used to extract useful skills for a particular task. In this example, the skill is a bipedal robot environment. In the bipedal robot environment, the agent controls a two-legged walker and must navigate through a rugged terrain with obstacles such as cliffs, gaps, and spikes. The objective is to move forward while maintaining balance and avoiding falls or collisions. It serves as a benchmark task to evaluate the performance of reinforcement learning algorithms in complex locomotion, balance control, and obstacle avoidance.

In such a case, a possible prompt to extract useful training information for the tasks could be following question: "What are the most useful skills an agent should have to control a bipedal robot in an environment?" Useful skills in an answer of an LLM may include:
- jumping over an object
- walking downhill
- walking uphill
- jumping over gap

### 2. Data generation and numerical policy training

In a second step the extracted skills are used to generate training data, e.g. by selecting suitable data partitions or via another data generation method in order to provide training data for particular subtasks such as 'jumping over an object' or 'walking downhill'. In this step, automatic or manual selection of data partitions/environment situations that can be associated with the skills is generated or extracted.

For each of the skills, a numerical policy is trained by means of a reinforcement learning algorithm, such as behavior cloning (if expert data already exists), actor-critic methods, or model-based RL algorithms - both offline and online variants are conceivable. The resulting policies are then saved in a collection under the name of the skill they represent.

### 3. Environment and state textualization

An environment textualization and tokenizer (textual state generator) is used to provide a textual representation of the current state, e.g., extract particular objects in the current scene with which an agent can interact. As a particular case, an environment textualization may comprise an object detection model. In this case, a serialized output may be provided as textual output of detected objects and location (e.g., "100 pixels in front of the agent is an object of width 50 pixels, followed by a 300 pixel wide downhill stair, followed by a 100 pixel wide gap").

Alternatively or in addition, the textual state generator may yield as an output a static prompt context which describes in textual form global properties of the technical system and desired attributes that define a successful control sequence. A possible realization can be a static context that describes the type of experts (numerical policies) that are available and a textual description of the global goal of the task so that a most suitable skill can be selected.

Alternatively or in addition, the textual state generator can be optimized at training time to improve a global reward such as a global long term success rate. The training of the textual state generator can be accomplished, e.g., by methods referred to as 'prompt optimization' and reinforcement learning from human feedback.

### 4. LLM Policy

An LLM Policy is used to provide an appropriate textual action given the current textual state and a static context. As a particular case, an LLM Policy may be based on a publicly available LLM that is running in the cloud or locally and is queried via an appropriate interface.

In the given example, the LLM policy would generate commands like "jump after running a distance of 40pixels", which it derived from the output description of the textual state generator.

### 5. Numerical information generator

A numerical information generator is used to generate or extract numerical information from the textual action of the LLM policy. Numerical information can be prompted so it appears in the textual output (e.g. "provide a numerical value for the target distance") or it may be generated automatically from textual data (e.g. "prioritize energy consumption over speed" -> kpi_energy=90%, kpi_speed=10%)

The data which are obtained by steps 1. to 5. Are used for the computer implemented reinforcement method (Execution and Deployment).

After training, the textual state generator 103, LLM-policy 110 and numerical policies 111 are executed in a loop to achieve a particular task. The following steps are iterated in order to obtain a numerical action:
1. A numerical system state (e.g. the set of coordinates of the bipedal walkers, the current rotation angles of its joints, pixels positions and dimensions of objects) in an environment is used to generate a textual state representation (possibly enriched by additional tokens) by a textual state generator 103. The textual state generator" 103 may comprise an object detection algorithm and a method for generating textual output from detected objects or other components that generate text as well as possible additional tokens.
   Basis for the textual state generator can be externally available models such as object detectors. Data to train or adapt this textual state generator can be generated by separate simulations, addressing performance gaps or expected challenges of the reinforcement learning policy. Hypothetical states and scenarios can be included using simulations to overcome lacking data. The textual state generator may additionally generate a static context that describes the system characteristics and desired attributes that define a successful control sequence.
2. An LLM policy 110 is executed on the data provided by the textual state generator in order to obtain a textual action from a textual state and propagate it's result into an appropriate numerical policy 111 with the aid of a numerical information generator 112.
   The LLM policy may receive an additional context input that describes system characteristics and/or desired control attributes.
   The LLM policy may be executed locally in a cloud depending on the available computational resources. The output of the LLM policy may comprise the selection of an appropriate skill and/or information such as desired prioritization of different KPIs (key performance indicators, e.g. "prefer speed over energy consumption in the current situation") or desired target values to achieve a long-term goal (e.g. "start to walk downhill and prepare to jump") that can be converted to numerical information and propagated to the numerical policy.
3. A textual action is used to select a numerical policy and generate additional numerical information, e.g., a numerical/categorical vector comprising target values and/or KPIs, which is propagated as additional information to the selected policy.
4. A numerical policy is selected from the collection of pre-trained skills from step 3.2, based on the skill that the LLM policy currently deems most useful and additional recommended numerical information (e.g., target distance, prioritization of different KPIs) is generated/extracted from the textual output of the LLM policy.
5. A numerical action is applied to a technical system to produce a new numerical state.

The result of the reinforcement learning method is the controlling of the machine with the aid of respective rewards 200.

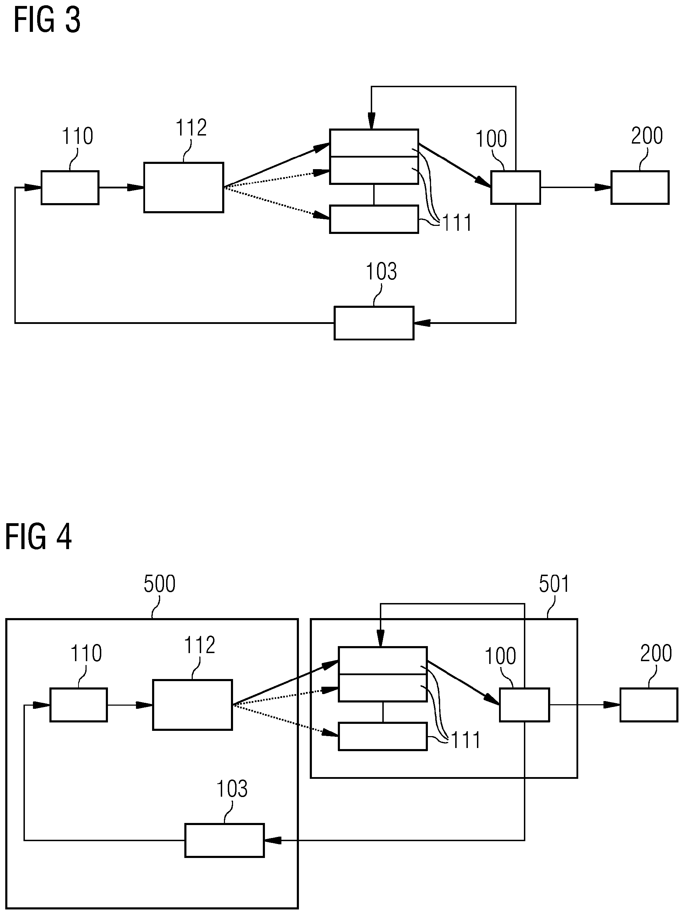

With fig. 4 the described execution cycle is depicted with functional split into textual state generated and LLM policy executed less frequenctly on a cloud-machine (500) and numerical policy executed with low latency on and edge device (501).

The reinforcement learning system is provided with a computer program product.

## Claims

1. Computer implemented reinforcement learning method (1) for controlling of a machine (1000), wherein at least one textual machine learning procedure and at least one numeric machine learning procedure are combined together and following steps are carried out:
a) providing of at least one numeric variable for quantifying an operating state of the machine and providing of at least one textual target for describing a predetermined target state of the machine (11);
b) applying of a textual state generator on the numeric variable and on the textual target for obtaining a textual representation which describes the numeric variable in textual form (12);
c) applying of the textual machine learning procedure on the textual state representation and on the textual target for obtaining a textual output of the textual machine learning procedure (13);
d) generating of at least one numeric input for the numeric machine learning procedure by using the textual output (14);
e) applying of the numeric machine learning procedure on the numeric input for getting a numeric output of the numeric machine learning procedure (15); and
f) applying of the numeric output for controlling of the numeric machine learning procedure for the controlling of the machine (16).

2. Method according to claim 1, wherein selecting of the numeric machine learning procedure is made by considering the textual output of the textual machine learning procedure.

3. Method according to claim 1 or 2, wherein a task is used which is a subtask of an overall task.

4. Method according to one of the claims 1 to 3, wherein for the textual machine learning procedure at least one large language model and for the textual input a prompt of the large language model are used.

5. Method according to one of the claims 1 to 4, wherein for the numeric machine learning procedure at least one neuronal network is used.

6. Method according to one of the claims 1 to 5, wherein at least one of steps of the reinforcement learning method are executed locally and/or executed in a cloud.

7. Method according to one of the claims 1 to 6, wherein for the applying of textual machine learning procedure and/or for the applying of the numeric machine learning procedure at least one missing information is estimated.

8. Method according to one of the claims 1 to 7, wherein the textual machine learning procedure is used for generating of a list of skills which can be used for a training of the numeric machine learning procedure.

9. Method according to one of the claims 1 to 8, wherein the numeric machine learning procedure and/or the textual learning procedure is carried out with the aid of a computer architecture with an execution time of less than 100 ms, more preferably of less than 10 ms and most preferably of less than 1 ms.

10. Method according to claim 9, wherein for the computer architecture at least one programmable integrated circuit is used which is selected from the group consisting of Microcontroller, DSP, FPGA and ASIC.

11. Reinforcement learning system (100) for carrying out a computer implemented reinforcement learning method (1) according to one of the claims 1 to 10 with following system elements:
- at least one textual machine learning element 101 for executing of the textual machine learning procedure;
- at least one numeric machine learning element (102) for executing of the numeric machine learning procedure;
- at least one textual state generator (103) for generating of the textual output of the textual machine learning procedure; and
- at least one numerical state generator (104) for generating of the numeric input.

12. Computer program product with a reinforcement learning system according to claim 11.
